# EUROPEAN PATENT APPLICATION

(11) **EP 4 770 241 A1**
(43) Date of publication of application: **01.07.2026**
(21) Application number: 24886387.0
(22) Date of filing: 04.11.2024
(51) Int. Cl.: H04W 72/21, H04W 8/24, H04W 28/02, H04W 72/231

(54) **METHOD AND DEVICE FOR TRIGGERING UPLINK BUFFER SIZE CHANGE-BASED BUFFER STATUS REPORT (BSR) IN WIRELESS COMMUNICATION SYSTEM**

(30) Priority: 02.11.2023 KR 20230150020
(71) Applicant: Samsung Electronics Co., Ltd., Suwon-si, Gyeonggi-do 16677 (KR)
(72) Inventor: SUN, Weiping, Suwon-si, Gyeonggi-do 16677 (KR); KANG, Hyunjeong, Suwon-si, Gyeonggi-do 16677 (KR); BAEK, Sangkyu, Suwon-si, Gyeonggi-do 16677 (KR)
(74) Representative: Nederlandsch Octrooibureau
(86) International application number: PCT/KR2024/017116
(87) International publication number: WO 2025/095717

(57) **Abstract**

The present disclosure relates to a method for efficiently improving a BSR transmission procedure and reception procedure, the method being performed by a terminal and comprising the steps of: transmitting a first SR based on first BSR triggering; receiving a first UL grant on the basis of the first SR; transmitting a MAC PDU on the basis of the first UL grant and canceling the first BSR; and transmitting a second SR to the base station on the basis of a change in the size of the UL buffer of the terminal.

## Description

### [Technical Field]

The disclosure relates to operations of a terminal and a base station in a wireless or mobile communication system. More particularly, the disclosure relates to a buffer status report (BSR) method for a terminal, a BSR acquisition (or obtainment) method for a base station, and associated terminals, base stations, and communication systems.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, with the advancement of wireless communication systems, the need for a device and method to improve BSR transmission and reception procedures is increasing.

### [Disclosure]

### [Technical Problem]

An object of the disclosure is to provide a device and method for effectively providing services in a wireless communication system. For example, the disclosure may provide a method and device for improving procedures for BSR transmission and reception in an efficient manner.

### [Technical Solution]

A method performed by a terminal in a wireless communication system according to an embodiment of the disclosure for solving the above problems may include: transmitting, to a base station, a first scheduling request (SR) based on triggering of a first buffer status report (BSR); receiving a first uplink (UL) grant from the base station based on the first SR; transmitting a medium access control (MAC) protocol data unit (PDU) based on the first UL grant, and canceling the triggered first BSR; identifying a change in UL buffer size of the terminal; and transmitting a second SR to the base station based on the change in the UL buffer size.

Meanwhile, a method performed by a base station in a wireless communication system according to another embodiment of the disclosure may include: receiving a first SR from a terminal based on triggering of a first BSR; transmitting a first uplink (UL) grant to the terminal based on the first SR; receiving a MAC PDU based on the first UL grant; and receiving a second SR from the terminal in response to cancelling of the triggered first BSR and detection of a change in UL buffer size of the terminal.

Meanwhile, a terminal in a wireless communication system according to another embodiment of the disclosure may include: a transceiver; and a controller that is configured to: transmit, through the transceiver to a base station, a first scheduling request (SR) based on triggering of a first buffer status report (BSR); receive a first uplink (UL) grant from the base station based on the first SR; transmit a medium access control (MAC) protocol data unit (PDU) based on the first UL grant, and cancel the triggered first BSR; identify a change in UL buffer size of the terminal; and transmit a second SR to the base station based on the change in the UL buffer size.

Meanwhile, a base station in a wireless communication system according to another embodiment of the disclosure may include: a transceiver; and a controller that is configured to: receive a first SR through the transceiver from a terminal based on triggering of a first BSR; transmit a first uplink (UL) grant to the terminal based on the first SR; receive a MAC PDU based on the first UL grant; and receive a second SR from the terminal in response to cancelling of the triggered first BSR and detection of a change in UL buffer size of the terminal.

The technical objectives to be achieved in the embodiments of the disclosure are not limited to those mentioned above, and other technical objectives not mentioned may be clearly understood by a person having ordinary skill in the art to which the disclosure belongs from the description below.

### [Advantageous Effects]

According to an embodiment of the disclosure, it is possible to effectively provide a service in a wireless communication system.

### [Description of Drawings]

FIG. 1 is a diagram illustrating the architecture of a new radio (NR) system according to an embodiment of the disclosure.
FIG. 2 is a diagram illustrating the structure of radio protocols in an NR system according to an embodiment of the disclosure.
FIG. 3 is a diagram illustrating Short BSR and Short Truncated BSR MAC CE format according to an embodiment of the disclosure.
FIG. 4A is a diagram illustrating Long BSR and Long Truncated BSR MAC CE format according to an embodiment of the disclosure.
FIG. 4B is a diagram illustrating Long BSR and Long Truncated BSR MAC CE format according to an embodiment of the disclosure.
FIG. 5 is a diagram illustrating a situation in which an Updating BSR is triggered by a decrease in the uplink buffer size of the UE according to an embodiment of the disclosure.
FIG. 6 is a diagram illustrating a situation in which an Updating BSR is triggered by a change in the uplink buffer size of the UE according to an embodiment of the disclosure.
FIG. 7 is a diagram illustrating the structure of a UE according to an embodiment of the disclosure.
FIG. 8 is a diagram illustrating the structure of a base station according to an embodiment of the disclosure.

### [Mode for Disclosure]

Hereinafter, exemplary embodiments of the disclosure will be described in detail with reference to the accompanying drawings. Here, it should be noted that identical components in the attached drawings are represented by the same symbols, where possible. Additionally, detailed descriptions of well-known functions and configurations that may obscure the subject matter of the disclosure will be omitted.

In describing the embodiments of the disclosure, descriptions of technical details that are well-known in the art to which the disclosure pertains and are not directly related to the disclosure will be omitted. This is to avoid obscuring the subject matter of the disclosure and convey it more clearly by omitting unnecessary explanations.

Likewise, in the drawings, some elements are exaggerated, omitted, or only outlined in brief. Also, the size of each element does not necessarily reflect the actual size. The same or similar reference symbols are used throughout the drawings to refer to the same or like parts.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the description to refer to the same parts.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

Each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in this embodiment may refer to a software component or a hardware component such as an FPGA (field programmable gate array) or ASIC (application specific integrated circuit) capable of carrying out a function or an operation. However, "unit" or the like is not limited to hardware or software. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Components and units may be implemented to drive one or more processors in a device or a secure multimedia card.

In the following description, the term "base station" refers to a main agent allocating resources to terminals and may be at least one of Node B, eNB (eNode B), gNB (gNode B), radio access unit, base station controller, or network node. The term "terminal" may refer to at least one of user equipment (UE), mobile station (MS), cellular phone, smartphone, computer, or multimedia system with a communication function.

Additionally, the embodiments of the disclosure may be applied to other communication systems having similar technical backgrounds or channel types as the embodiments of the disclosure described below. In addition, the embodiments of the disclosure may be applied to other communication systems through some modifications without significantly departing from the scope of the disclosure. For example, this may include the 5^{th} generation mobile communication technology (5G, new radio, NR) developed after LTE-A, and the term 5G hereinafter may be a concept that includes existing LTE, LTE-A, and other similar services. Further, it should be understood by those skilled in the art that the disclosure is applicable to other communication systems without significant modifications departing from the scope of the disclosure.

Those terms used in the following description for identifying an access node, indicating a network entity or network function (NF), indicating a message, indicating an interface between network entities, and indicating various identification information are taken as illustration for ease of description. Hence, the disclosure is not limited by the terms to be described later, and other terms referring to objects having an equivalent technical meaning may be used.

For convenience of explanation, some terms and names defined in the 3GPP (3rd generation partnership project) LTE (long term evolution) standards and/or 3GPP NR (new radio) standards may be used in the following description. However, the disclosure is not limited by the above terms and names, and may be equally applied to systems complying with other standards.

Wireless communication systems are evolving from early systems that provided voice-oriented services only to broadband wireless communication systems that provide high-speed and high-quality packet data services, such as systems based on communication standards including 3GPP High Speed Packet Access (HSPA), Long Term Evolution (LTE) or Evolved Universal Terrestrial Radio Access (E-UTRA), LTE-advanced (LTE-A), LTE-Pro, 3GPP2 High Rate Packet Data (HRPD), Ultra Mobile Broadband (UMB), and IEEE 802.16e.

As a representative example of the broadband wireless communication system, the LTE system employs Orthogonal Frequency Division Multiplexing (OFDM) in the downlink (DL) and Single Carrier Frequency Division Multiple Access (SC-FDMA) in the uplink (UL). The uplink refers to a radio link through which a terminal (user equipment (UE)) sends a data or control signal to a base station (eNB, gNB), and the downlink refers to a radio link through which a base station sends a data or control signal to a terminal. In such a multiple access scheme, time-frequency resources used to carry user data or control information are allocated so as not to overlap each other (i.e., maintain orthogonality) to thereby identify the data or control information of a specific user.

As a communication system after LTE, the 5G communication system should support services satisfying various requirements so as to freely reflect various requirements of users and service providers. Services being considered for the 5G communication system include enhanced mobile broadband (eMBB), massive machine type communication (mMTC), and ultra-reliable and lowlatency communication (URLLC).

According to an embodiment, eMBB aims to provide a data transmission rate that is more improved in comparison to the data transmission rate supported by existing LTE, LTE-A, or LTE-Pro. For example, in the 5G communication system, eMBB must be able to provide a peak data rate of 20 Gbps in the downlink and a peak data rate of 10 Gbps in the uplink from the viewpoint of one base station. At the same time, the 5G communication system may have to provide an increased user perceived data rate for the terminal. To meet such requirements in the 5G communication system, it is required to improve various transmission and reception technologies including more advanced multi-antenna or multi-input multi-output (MIMO) technology. Further, while the current LTE transmits signals using a transmission bandwidth of up to 20MHz in the 2GHz band, the 5G communication system may satisfy the required data transmission rate by using a frequency bandwidth wider than 20MHz in the 3-6GHz or 6GHz or higher frequency band.

At the same time, in the 5G communication system, mMTC is considered to support application services such as the Internet of Things (IoT). For efficient support of IoT services, mMTC may have to support access of a massive number of terminals in a cell, extend the coverage for the terminal, lengthen the battery time, and reduce the cost of the terminal. The Internet of Things should be able to support a massive number of terminals (e.g., 1,000,000 terminals/km²) in a cell to provide a communication service to sensors and components attached to various devices. In addition, since a terminal supporting mMTC is highly likely to be located in a shadow area not covered by a cell, such as the basement of a building, due to the nature of the service, it may require wider coverage compared to other services provided by the 5G communication system. A terminal supporting mMTC should be configured as a low-cost terminal, and since it is difficult to frequently replace the battery of a terminal, a very long battery life time such as 10 to 15 years may be required.

Finally, URLLC is a cellular-based wireless communication service used for a specific purpose (mission-critical), and may be utilized in services usable for remote control of robots or machinery, industrial automation, unmanned aerial vehicles, remote health care, and emergency alert. Hence, the communication provided by URLLC may have to provide ultra-low latency and ultra-high reliability. For example, a URLLC service may have to support both an air interface latency of less than 0.5ms and a packet error rate of 10⁻⁵ or less as a requirement. Hence, for a service supporting URLLC, the 5G system should not only provide a transmission time interval (TTI) shorter than that of other services but also support design considerations for allocating wider resources in the frequency band to ensure the reliability of the communication link.

The above three services (i.e., eMBB, URLLC, and mMTC) considered in the 5G communication system may be multiplexed and transmitted in one system. Here, to satisfy different requirements of individual services, different transmission and reception techniques and parameters may be used between services. However, mMTC, URLLC, and eMBB described above are examples of different service types, and the service types to which the disclosure applies are not limited to those mentioned above.

Additionally, although embodiments of the disclosure are described below utilizing LTE, LTE-A, LTE Pro, 5G (or NR), or 6G systems as examples, the embodiments of the disclosure may also be applied to other communication systems with similar technical backgrounds or channel configurations. In addition, a person skilled in the art will understand that the embodiments of the disclosure can be applied to other communication systems with minor modifications not significantly departing from the scope of the disclosure.

In a next-generation/5G (new radio, NR) wireless communication system, to help the base station more efficiently schedule resources, the UE needs to report its buffer status to the base station. The buffer status report (BSR) is used to report the amount of data stored in the UE's buffer (buffer size) to the base station. According to the NR specification, the UE selects the index of the interval containing the buffer size to be reported from the buffer size ranges defined by indexes in a buffer size table and includes it in the BSR.

Buffer status reporting in the NR system may be performed based on MAC layer signaling between the UE and the base station. That is, when a BSR is triggered at a specific transmission occasion, the UE may include a BSR control element (MAC CE) in a MAC protocol data unit (PDU) and transmit it to the base station. Here, the BSR control element indicates the amount of data (buffer size) remaining in the UE's uplink buffer per logical channel group (LCG) after the corresponding MAC PDU has been composed. The base station may estimate the amount of data remaining in the UE's buffer based on the BSR received from the UE. In the NR system, the UE may manage the transmission buffer for data to be transmitted to the base station for each of eight LCGs.

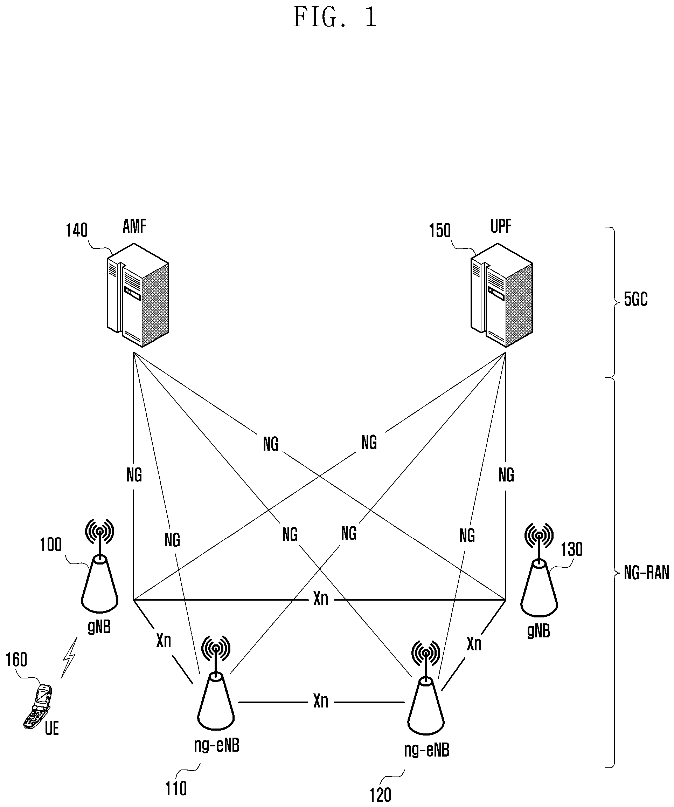

FIG. 1 is a diagram illustrating the architecture of an NR system according to an embodiment of the disclosure.

With reference to FIG. 1, the wireless communication system may be comprised of multiple base stations (e.g., gNB 100, ng-eNB 110, ng-eNB 120, gNB 130), access and mobility management function (AMF) 140, and user plane function (UPF) 150. Certainly, the wireless communication system is not limited to the configuration shown in FIG. 1 and may include more or fewer entities.

According to an embodiment of the disclosure, a user equipment (referred to as UE or terminal) 160 may connect to an external network through the base stations 100, 110, 120 and 130 and the UPF 150.

In FIG. 1, the base station 100, 110, 120 or 130 serving as an access node of a cellular network and may provide radio access to at least one UE accessing the network. For example, to service users' traffic, the base station 100, 110, 120 or 130 may collect status information such as buffer status, available transmission power status, and channel status of individual UEs for scheduling and support connections between the UEs and the core network (CN, in particular, the CN of NR is referred to as 5GC).

In FIG. 1, the base station 100, 110, 120 or 130 may control multiple cells, and may apply adaptive modulation and coding (AMC) that determines a modulation scheme and a channel coding rate according to the channel status of a UE.

The core network is an entity responsible for mobility management and various control functions for UEs 160 and may be connected to multiple base stations 100, 110, 120 and 130. The 5GC may also interwork with existing LTE systems. In the following description, each function within the core network may be described as an entity or node.

Meanwhile, in a wireless communication system, the user plane (UP), which is related to the transmission of actual user data, and the control plane (CP), which handles connection management, may be configured separately. In FIG. 1, the gNB 100 and gNB 130 may use UP and CP techniques defined in NR technology, and the ng-eNB 110 and ng-eNB 120 may use UP and CP techniques defined in long term evolution (LTE) technology although they are connected to the 5GC.

The AMF 140 is an entity responsible for mobility management and various control functions for UEs and may be connected to multiple base stations. Additionally, the UPF 150 may refer to a type of gateway entity that provides data transmission.

Although not shown in FIG. 1, the NR wireless communication system may also include a session management function (SMF). The SMF may manage packet data network connections such as PDU sessions provided to UEs.

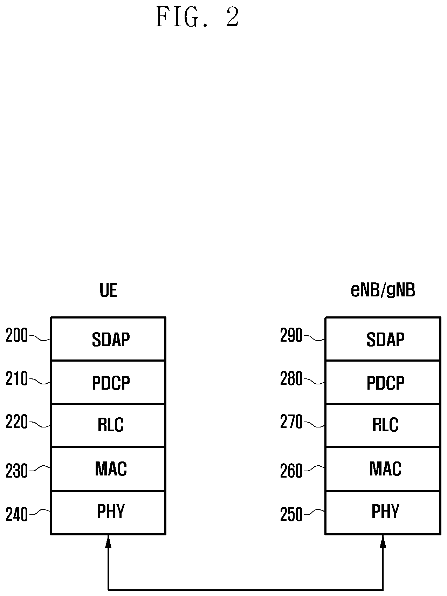

FIG. 2 is a diagram illustrating the structure of radio protocols in the NR/LTE system according to an embodiment of the disclosure.

With reference to FIG. 2, in the UE or the base station, the radio protocols of the NR system may be composed of service data adaptation protocol (SDAP) 200 or 290, packet data convergence protocol (PDCP) 210 or 280, radio link control (RLC) 220 or 270, and MAC 230 or 260.

The SDAP 200 or 290 may perform operations for transferring user plane data, mapping between quality-of-service (QoS) flows and data radio bearers (DRBs) for uplink and downlink, marking QoS flow ID in uplink and downlink packets, and mapping reflective QoS flow to data bearer for uplink SDAP PDUs. The SDAP settings corresponding to each DRB may be provided from the higher RRC layer. Certainly, it is not limited to the above examples.

The PDCP 210 or 280 may be responsible for operations such as IP (Internet protocol) header compression and decompression. Additionally, the PDCP 210 or 280 may provide functions for in-sequence or out-of-sequence delivery, reordering, duplicate detection, retransmission, and ciphering and deciphering. Certainly, it is not limited to the above examples.

The RLC 220 or 270 may reconfigure PDCP PDUs to a suitable size. Additionally, the RLC 220 or 270 may provide functions for in-sequence or out-of-sequence delivery, automatic repeat request (ARQ), concatenation/segmentation and reassembly, re-segmentation, reordering, duplicate detection, and error detection. Certainly, it is not limited to the above examples.

The MAC 230 or 260 may be connected with multiple RLC entities configured in a UE, and it may multiplex RLC PDUs into MAC PDUs and demultiplex MAC PDUs into RLC PDUs. Additionally, the MAC 230 or 260 may provide functions for mapping, scheduling information reporting, HARQ (hybrid ARQ), priority handling between logical channels, priority handling between UEs, MBMS (multimedia broadcast/multicast service) service identification, transport format selection, and padding. Certainly, it is not limited to the above examples.

The physical layer (PHY) 240 or 250 may convert higher layer data into OFDM symbols by means of channel coding and modulation and transmits the OFDM symbols through a radio channel, or it may demodulate OFDM symbols received through a radio channel, perform channel decoding, and forward the result to a higher layer. Further, in the physical layer, HARQ is used for additional error correction, and the receiving end transmits one bit indicating reception of a packet transmitted from the transmitting end. This is called HARQ ACK(acknowledgement)/NACK (negative ACK) information.

In LTE, downlink (DL) HARQ ACK/NACK information for an uplink (UL) data transmission is transmitted through a physical channel called PHICH (physical hybrid-ARQ indicator channel); in NR, it can be determined whether retransmission or new transmission is required based on scheduling information of the UE on physical dedicated control channel (PDCCH), which is a channel through which downlink/uplink resource allocation, etc. are transmitted. This is because asynchronous HARQ is applied in NR. Uplink HARQ ACK/NACK information for a downlink data transmission may be transmitted through a physical channel called physical uplink control channel (PUCCH) or physical uplink shared channel (PUSCH). The PUCCH is generally transmitted in the uplink of the PCell (primary cell) to be described later, but when the UE supports, the PUCCH may be additionally provided to the UE by the base station via a SCell (secondary cell) to be described later, which is referred to as PUCCH SCell.

Although not shown in FIG. 2, the radio resource control (RRC) layer is present on top of the PDCP layer of each of the UE and the base station, and the RRC layers may transmit and receive connection and measurement related configuration control messages for radio resource control.

Meanwhile, the PHY layer may be composed of one or plural frequencies/carriers, and a technique for simultaneously configuring and using a plurality of frequencies is called carrier aggregation (CA). A single carrier may be used for communication between the UE and the base station (eNB or gNB), but when CA is employed, a primary carrier and one or more secondary carriers may be used for communication, significantly increasing the data transfer rate by an amount corresponding to the number of additional secondary carriers. Meanwhile, in LTE/NR, a cell in a base station utilizing a primary carrier is called a primary cell (PCell), and a cell utilizing a secondary carrier is called a secondary cell (SCell).

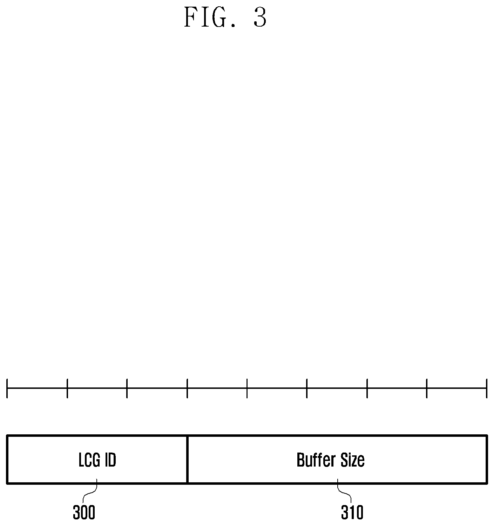

FIG. 3 is a diagram illustrating Short BSR and Short Truncated BSR MAC CE format according to an embodiment of the disclosure.

With reference to FIG. 3, a Short BSR MAC CE may include a 3-bit LCG ID field 300 and a 5-bit Buffer Size field 310. The LCG ID field 300 indicates an LCG ID (0 to 7), and the Buffer Size (BS) field 310 indicates the Buffer Size (BS) index determined by the uplink buffer size corresponding to the LCG ID 300. The BS index has a value between 0 and 31. The BS index may indicate the index of the range including the uplink buffer size corresponding to the LCG ID 300 among the buffer size ranges defined in the buffer size table predefined for the 5-bit BS field.

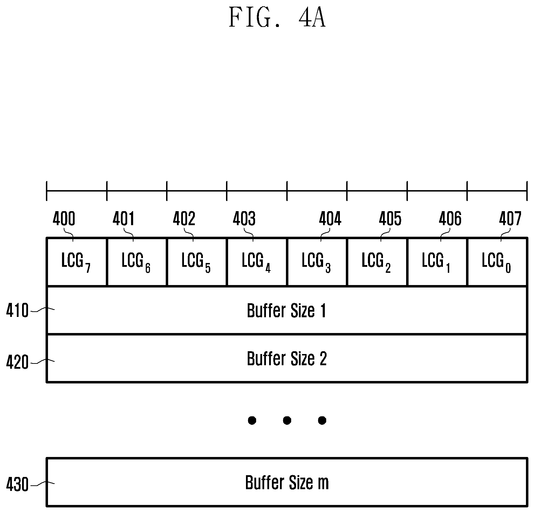

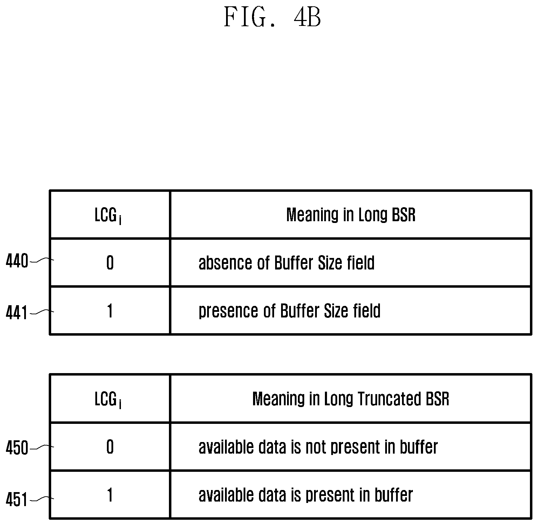

FIGS. 4A and 4B are a diagram illustrating Long BSR and Long Truncated BSR MAC CE format according to an embodiment of the disclosure.

With reference to FIGS. 4A and 4B, the Long BSR MAC CE may indicate the presence or absence of a Buffer Size field corresponding to one of the eight LCGs from LCG ID 7 (400) to LCG ID 0 (407) by using the eight bits of the first byte. If a bit of the first byte is set to 0 (440), this may indicate that the Buffer Size field of the corresponding LCG is not present in the Long BSR MAC CE. Conversely, if the bit is set to 1 (441), this may indicate that the Buffer Size field of the corresponding LCG is present in the Long BSR MAC CE. For example, the Long BSR MAC CE may include as many Buffer Size fields as the number of bits in the first byte that have a value of 1. In the Long BSR MAC CE, the length of the Buffer Size fields 410, 420 and 430 may be 8 bits.

With reference to FIGS. 4A and 4B, the Long Truncated BSR MAC CE may indicate whether the uplink buffer size of the corresponding LCG from LCG ID 7 (400) to LCG ID 0 (407) is greater than 0 (i.e., whether uplink data is available) by using the eight bits in the first byte. For example, if a bit of the first byte is set to 0 (450), this may indicate that available uplink data is not present for the corresponding LCG; if the bit is set to 1 (451), this may indicate that available uplink data is present for the corresponding LCG.

For example, in the Long Truncated BSR MAC CE, the number of Buffer Size fields 410, 420 and 430 may be indicated by the L field of the MAC subheader placed in front of the corresponding MAC CE, and the Buffer Size (BS) fields 410, 420 and 430 may be added to the MAC CE as many as the available padding bit size in descending order of priority among LCGs with available data. Like the Buffer Size field of the Short BSR, the Buffer Size field of the Long BSR or Long Truncated BSR may also indicate a BS index determined by the uplink buffer size.

The NR system defines a buffer size table for the 8-bit BS field for the Long BSR or Long Truncated BSR, and the index of the buffer size range containing the uplink buffer size may be indicated by the BS field. While the BS field of the Short BSR is 5 bits long, the BS field of the Long BSR or Long Truncated BSR is 8 bits long. The buffer size table referenced by the Long BSR defines a total of 255 BS indexes, from 0 to 254, with 255 reserved and unused. Upon receiving the BS index, the base station may obtain information about the uplink buffer size for the corresponding LCG by referring to the buffer size table for the Long BSR.

According to an embodiment of the disclosure, when a UE triggers a Regular BSR in a specific activated cell group, it may be due to one or a combination of the following conditions.
- New uplink data may be generated on a logical channel (LCH) belonging to a logical channel group (LCG), and the priority of the LCH may be higher than that of other LCHs having uplink data. In this case, the UE may consider that the triggered Regular BSR has been triggered by the LCH on which the new uplink data is generated.
- New uplink data may be generated on a logical channel (LCH) belonging to a logical channel group (LCG), and, no uplink data may be present on all LCHs for all the LCGs before generation of the new uplink data. In this case, the UE may consider that the triggered Regular BSR has been triggered by the LCH on which the new uplink data is generated.
- When the BSR retransmission timer (e.g., retxBSR-Timer) expires, uplink data may be present on at least one LCH and the LCH belongs to an LCG. In this case, the UE may consider that the triggered Regular BSR has been triggered by the LCH with the highest priority among the LCHs on which the uplink data is present.

As an embodiment of the disclosure, when a Regular BSR has already been triggered, if a specific timer (e.g., logicalChannelSR-DelayTimer) for the LCH that has triggered the Regular BSR is not running, the UE may trigger a scheduling request (SR) corresponding to the LCH for the Regular BSR if at least one or a combination of the following conditions is satisfied.
- There is no UL-SCH (uplink shared channel) resource for initial transmission (or new transmission)
- The corresponding MAC entity is configured with configured grant(s), and logicalChannelSR-Mask of the LCH having triggered the Regular BSR is set to false
- There are UL-SCH resources for initial transmission, but these UL-SCH resources cannot be used for the LCH having triggered the Regular BSR due to LCP (logical channel prioritization) mapping restrictions

Here, logicalChannelSR-Mask may be a parameter that controls SR triggering when a configured grant is configured.

According to an embodiment of the disclosure, the UE may trigger a Periodic BSR when a periodic BSR timer (e.g., periodicBSR-Timer) expires in a specific activated cell group.

According to an embodiment of the disclosure, if a specific UL grant includes all available uplink pending data but does not include a BSR MAC CE and corresponding subheader, all triggered BSRs may be canceled.

According to an embodiment of the disclosure, if a specific MAC PDU includes a BSR MAC CE and the buffer status of all BSR trigger events that have occurred prior to the assembly of the corresponding MAC PDU (including the buffer status of the last BSR trigger event) is reported through this BSR, all BSRs triggered prior to the corresponding MAC PDU assembly may be canceled.

As an embodiment of the disclosure, when Regular BSRs are triggered by multiple LCHs, each LCH may trigger a separate Regular BSR. For example, when a specific LCH triggers a Regular BSR, the SR corresponding to the LCH may be transmitted via PUCCH resources to the base station. Here, as the base station may identify the LCH corresponding to the received SR, it may know that uplink data of the corresponding LCH has been generated in the uplink buffer of the UE, and thus may determine the size and timing of the uplink grant by referring to the QoS-Flow characteristics of the corresponding LCH.

As an embodiment of the disclosure, when discardTimer or discardTimerForLowImportance of a specific PDCP SDU belonging to the PDCP entity of the terminal expires, the transmitting PDCP entity may operate as follows.
- If pdu-SetDiscard is configured:
   ▪ May discard all PDCP SDUs belonging to the PDU set to which the PDCP SDU belongs along with the corresponding PDCP Data PDUs.
- If pdu-SetDiscard is not configured:
   ▪ May discard the PDCP SDU along with the corresponding PDCP Data PDU.
- If the corresponding PDCP Data PDU has already been submitted to lower layers, the discard indication may be delivered to lower layers.

According to an embodiment of the disclosure, for SRBs, when a PDCP SDU discard indication is received from upper layers, the PDCP entity may discard all stored PDCP SDUs and PDCP PDUs.

According to an embodiment of the disclosure, for BSR reporting, the buffer size of a specific LCG in the cell group to which the UE MAC entity belongs may be equal to the sum of the buffer sizes of all LCHs belonging to the LCG. For example, in a cell group to which the UE MAC entity belongs, the buffer size of a specific LCH may be equal to the sum of the buffer sizes of the RLC entity and the PDCP entity corresponding to the LCH.

For example, in a cell group to which the UE MAC entity belongs, the buffer size of a specific PDCP entity may be equal to the sum of the data sizes in the PDCP buffer for the following cases.
- PDCP SDUs for which a corresponding PDCP Data PDU has not yet been constructed
- PDCP Data PDUs that have not yet been delivered to lower layers
- PDCP Control PDUs
- For AM DRBs, PDCP SDUs to be retransmitted according to clause 5.1.2 and clause 5.13 of specification 38.323
- For AM DRBs, PDCP Data PDUs to be retransmitted according to clause 5.5 of specification 38.323

For example, in a cell group to which the UE MAC entity belongs, the data volume of a specific RLC buffer may be equal to the sum of the data sizes for the following cases.
- RLC SDUs and RLC SDU segments that are not included in RLC data PDUs
- RLC Data PDUs waiting in pending state for initial transmission
- For RLC AM, RLC Data PDUs waiting for retransmission
- If a Status PDU is triggered and the t-StatusProhibit timer is not running or has expired: the size of the Status PDU to be transmitted at the next transmission opportunity may be predicted and added to the RLC data volume.

The above Regular BSR trigger conditions may be viewed as reflecting only some of the cases where new data occurs in the uplink buffer. For example, if the priority of the LCH on which new data is generated is lower than or equal to the priority of the LCH for existing data, a Regular BSR may be not triggered. However, if such a change in uplink buffer size is not immediately reported to the base station, the base station may be unable to allocate UL grants in a timely manner, resulting in increased service delays. To address the above issue, a new BSR trigger condition may be needed that can immediately report to the base station when new data is generated in the uplink buffer.

Meanwhile, the Regular BSR trigger condition described above may be viewed as being designed only for cases where new data is generated in the uplink buffer. However, if a PDCP SDU is discarded when discardTimer expires (the PDU set to which the corresponding PDCP SDU belongs may be discarded in whole), the uplink buffer size may decrease. If the uplink buffer size has previously been reported to the base station via a BSR, the base station is highly likely to allocate UL grants based on the buffer size reported by that BSR. Hence, if the decrease in uplink data being discarded due to expiration of DiscardTimer fails to be reflected, which results in unnecessary allocation of a larger number of UL grants, the UE may assign meaningless padding bits to the corresponding resources instead of assigning meaningful data. The above assignment of meaningless padding bits may result in waste of UL resources. To address this issue, a new BSR trigger condition may be needed to immediately report to the base station when the size of the uplink buffer has decreased.

The disclosure proposes a new BSR trigger condition that can quickly report changes in uplink buffer size to the base station.

According to an embodiment of the disclosure, when a decrease in the UL buffer size (buffer size, data volume) occurs for a specific LCH belonging to a LCG/specific LCG/corresponding MAC entity/corresponding cell group in a specific activated cell group, a BSR may be triggered or the corresponding periodicBSR timer may be forcibly terminated if one or multiple of the following conditions are met. For example, the BSR triggered in this case may be called an Updating BSR.
- Condition 1: the decrease in the UL buffer size for LCH/LCG/MAC entity/cell group exceeds or equals a specific threshold. This may mean that only one-time (single event) decreases are compared against the corresponding thresholds. For example, the threshold may be set by the base station via RRC signaling (e.g., RRC reconfiguration) per LCH/LCG/MAC entity/cell group. Setting a threshold like this may be used as a means to prevent the BSR from being triggered too frequently due to small changes in the uplink buffer.
- Condition 2: the uplink buffer size reduction not yet reported to the base station (after the most recent BSR report) exceeds or equals a specific threshold with respect to the uplink buffer size of the corresponding LCH, the uplink buffer size of the LCG to which the corresponding LCH belongs, or the total uplink buffer size of the corresponding cell group. This may mean that the cumulative reduction (after the most recent BSR report) is compared with the corresponding threshold. For example, the threshold may be set by the base station via RRC signaling (e.g., RRC reconfiguration) per LCH/LCG/cell group. Setting a threshold like this may be introduced as a means to prevent the BSR from being triggered too frequently due to small changes in the uplink buffer.
- Condition 3: the prohibit timer for a new Updating BSR is not running or has expired. For example, this timer may be present/set/started per LCH/LCG/MAC entity/cell group. For example, this timer may be started/restarted when a MAC PDU containing a BSR MAC CE is transmitted, when a MAC PDU containing a BSR MAC CE other than a Truncated BSR is transmitted, or when an Updating BSR is triggered in the corresponding LCH/LCG/MAC entity/cell group. This timer may be used as a means to prevent the Updating BSR from being triggered too frequently.
- Condition 4: there is no pending Updating BSR or pending BSR (Regular, Periodic, or Updating BSR) for the corresponding LCH, the LCG to which the corresponding LCH belongs, or the corresponding cell group. If there is already a pending BSR, no additional BSR trigger may be needed.
- Condition 5: the priority of the corresponding LCH/LCG is higher than the priority of the LCH/LCG that has triggered other pending Updating BSR and/or other pending Regular BSR. When the LCH/LCG with a higher priority triggers an Updating BSR, even if there is a Regular/Updating BSR that has already been triggered, triggering the corresponding Updating BSR may result in the effect that the SR of the LCH/LCG with a higher priority triggered by the corresponding BSR can be transmitted to the base station.
- Condition 6: a PSI-based PDU discard activation MAC CE transmitted by the base station is received, but a PSI-based PDU discard deactivation MAC CE is not received yet (during PSI-based PDU discard activation period). For example, the Updating BSR may be restricted to triggering only when the uplink buffer size decreases due to discarding PDUs/PDU sets with low PSI importance, or only when the uplink buffer size decreases due to discarding PDUs/PDU sets with high PSI importance. For instance, the determination of PDUs/PDU sets with high or low PSI importance may be left to UE implementation. Since a significantly larger amount of uplink data can be discarded when PSI-based PDU discard is activated, the Updating BSR can be triggered only during this period. For example, upon receiving a PSI-based PDU discard activation MAC CE, the prohibit timer for the Updating BSR may be started/restarted. For example, upon receiving a PSI-based PDU discard deactivation MAC CE, the prohibit timer for the Updating BSR may be stopped/expired.

According to an embodiment of the disclosure, when a change (increase or decrease) occurs in the UL buffer size (buffer size, data volume) for specific LCH/specific LCG/corresponding MAC entity/corresponding cell group in a specific activated cell group, a BSR may be triggered or a periodicBSR timer may be forcibly terminated if one or multiple of the following conditions are met. For example, the BSR triggered in this case may be referred to as an Updating BSR. The above change in the UL buffer size may include both a case where the UL buffer size increases due to the occurrence of new UL data and a case where the UL buffer size decreases due to a discard operation.
- Condition 1: the change in the UL buffer size for LCH/LCG/MAC entity/cell group exceeds or equals a specific threshold. This may mean that only one-time (single event) changes are compared against the corresponding thresholds. For example, the threshold may be set by the base station via RRC signaling (e.g., RRC reconfiguration) per LCH/LCG/MAC entity/cell group. Setting a threshold like this may be used as a means to prevent the BSR from being triggered too frequently due to small changes in the uplink buffer.
- Condition 2: the uplink buffer size change not yet reported to the base station (after the most recent BSR report) exceeds or equals a specific threshold with respect to the uplink buffer size of the corresponding LCH, the uplink buffer size of the LCG to which the corresponding LCH belongs, or the total uplink buffer size of the corresponding cell group. Condition 2 may mean that the cumulative change (after the most recent BSR report) is compared with the corresponding threshold. For example, the threshold may be set by the base station via RRC signaling (e.g., RRC reconfiguration) per LCH/LCG/cell group. Setting a threshold like this may be introduced as a means to prevent the BSR from being triggered too frequently due to small changes in the uplink buffer.
- Condition 3: the prohibit timer for a new Updating BSR is not running or has expired. For example, this timer may be present/set/started per LCH/LCG/MAC entity/cell group. For example, this timer may be started/restarted when a MAC PDU containing a BSR MAC CE is transmitted, when a MAC PDU containing a BSR MAC CE other than a Truncated BSR is transmitted, or when an Updating BSR is triggered. This timer may be used as a means to prevent the Updating BSR from being triggered too frequently.
- Condition 4: there is no pending Updating BSR or pending BSR (Regular, Periodic, or Updating BSR) for the corresponding LCH, the LCG to which the corresponding LCH belongs, or the corresponding cell group. If there is already a pending BSR, no additional BSR trigger may be needed.
- Condition 5: the priority of the corresponding LCH/LCG is higher than the priority of the LCH/LCG that has triggered other pending Updating BSR and/or other pending Regular BSR. When the LCH/LCG with a higher priority triggers an Updating BSR, even if there is a Regular/Updating BSR that has already been triggered, triggering the corresponding Updating BSR may result in the effect that the SR of the LCH/LCG with a higher priority triggered by the corresponding BSR can be transmitted to the base station.
- Condition 6: a PSI-based PDU discard activation MAC CE transmitted by the base station is received, but a PSI-based PDU discard deactivation MAC CE is not received yet (during PSI-based PDU discard activation period). For example, the Updating BSR may be restricted to triggering only when the uplink buffer size decreases due to discarding PDUs/PDU sets with low PSI importance, or only when the uplink buffer size decreases due to discarding PDUs/PDU sets with high PSI importance. For instance, the determination of PDUs/PDU sets with high or low PSI importance may be left to UE implementation. Since a significantly larger amount of uplink data can be discarded when PSI-based PDU discard is activated, the Updating BSR can be triggered only during this period. For example, upon receiving a PSI-based PDU discard activation MAC CE, the prohibit timer for the Updating BSR may be started/restarted. For example, upon receiving a PSI-based PDU discard deactivation MAC CE, the prohibit timer for the Updating BSR may be stopped/expired.

According to an embodiment of the disclosure, when the UE receives a PSI-based PDU discard deactivation MAC CE transmitted by the base station, the UE may trigger an Updating BSR in the corresponding cell group. For example, the base station may include signaling for triggering an Updating BSR in the PSI-based PDU discard deactivation MAC CE. For example, this signaling may be implemented by setting a specific bit of the PSI-based PDU discard deactivation MAC CE to 1. For example, the base station may transmit a UL grant to the UE by including it in a PSI-based PDU discard deactivation MAC CE or in a MAC PDU containing the corresponding MAC CE. This UL grant may be used to transmit a BSR MAC CE.

As an embodiment of the disclosure, when an Updating BSR has already been triggered, if a specific timer (e.g., logicalChannelSR-DelayTimer) for the LCH that has triggered the Updating BSR is not running, the UE may trigger an SR for Regular BSR, an SR for Updating BSR, or a SR common for Regular BSR and Updating BSR configured for the corresponding LCH if at least one or a combination of the following conditions is satisfied.
- There are no UL-SCH (uplink shared channel) resources for initial transmission (or new transmission)
- The corresponding MAC entity is configured with configured grant(s), and logicalChannelSR-Mask of the LCH that has triggered the Updating BSR is set to false
- There are UL-SCH resources for initial transmission, but these UL-SCH resources cannot be used for the LCH that has triggered the Updating BSR due to LCP (logical channel prioritization) mapping restrictions

Here, logicalChannelSR-Mask may be a parameter that controls SR triggering when a configured grant is configured.

As an embodiment of the disclosure, the Updating BSR may be considered a type of Regular BSR. This may mean that when an Updating BSR is triggered, the same SR trigger/transmission procedure as when a Regular BSR is triggered may be performed by applying the same SR configuration.

According to an embodiment of the disclosure, the base station may allocate a dedicated schedulingRequestID (e.g., schedulingRequestID-UpdatingBSR-r18) for an LCH of a specific cell group within the LCH-specific configuration information (e.g., LogicalChannelConfig) via RRC signaling (e.g., RRC reconfiguration). This schedulingRequestID-UpdatingBSR-r18 may indicate an SR configuration having an SR resource different from the SR (schedulingRequestID) triggered by a regular BSR. The base station may be aware that an Updating BSR has been triggered upon receiving the Updating BSR dedicated SR transmitted by the UE. Hence, the base station may provide (allocate) a UL grant enabling transmission of the Updating BSR to the UE. Here, the base station may consider that a trigger event for Updating BSR has occurred when determining the size of the UL grant.

For example, the LCH configuration including a setting for schedulingRequestID-UpdatingBSR-r18 may have an ASN.1 structure disclosed in Table 1 below. For example, for an LCH for which schedulingRequestID-UpdatingBSR-r18 is not set, an Updating BSR may be not triggered even if the Updating BSR trigger condition is met. For example, for an LCH for which schedulingRequestID-UpdatingBSR-r18 is not set, the SR may be not triggered even if an Updating BSR is triggered.

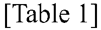

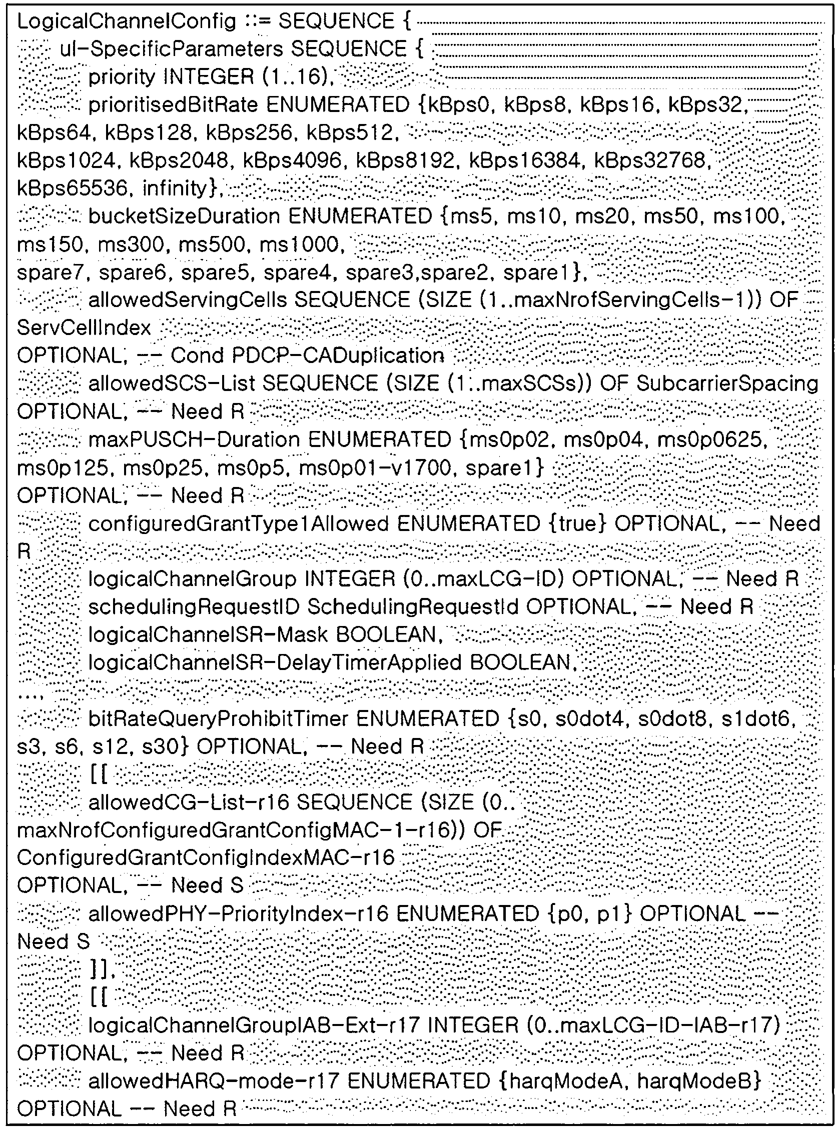

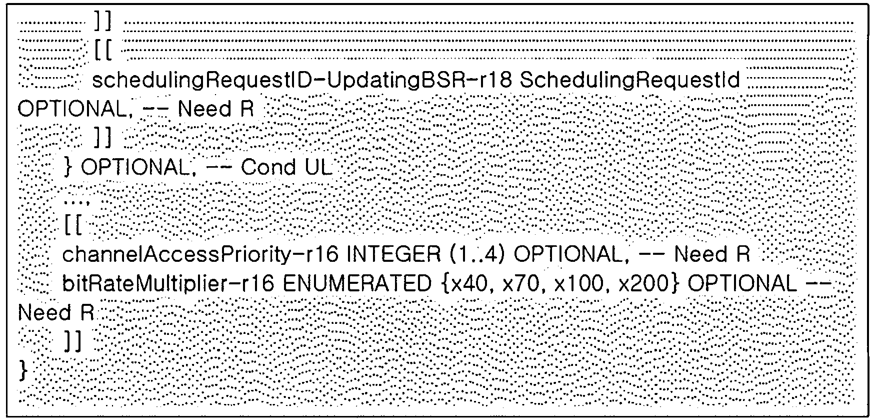

According to an embodiment of the disclosure, the base station may include information indicating whether to trigger an Updating BSR (e.g., TriggerUpdatingBSR (TRUE or FALSE), or TriggerUpdatingBsrBit (1 or 0)) in LCH-specific configuration information (e.g., LogicalChannelConfig) of a specific cell group/MAC entity via RRC signaling (e.g., RRC reconfiguration). Based on this indication, the UE may trigger an Updating BSR only for the LCH where the Updating BSR is set to be triggered if the Updating BSR trigger condition described above is satisfied.

According to an embodiment of the disclosure, the base station may allocate schedulingRequestID (e.g., schedulingRequestID-UpdatingBSR-r18) dedicated for the Updating BSR on a per-MAC entity/cell group basis within specific MAC entity/cell group configuration information (e.g., MAC-CellGroupConfig) via RRC signaling (e.g., RRC reconfiguration). This schedulingRequestID-UpdatingBSR-r18 may indicate the SR configuration/SR resource of the SR that is triggered when an Updating BSR is triggered in the corresponding MAC entity/cell group.

For example, if schedulingRequestID-UpdatingBSR-r18 is configured in a specific MAC entity/cell group, and an Updating BSR that has not yet been canceled is triggered in the MAC entity/cell group:
- For the case where there is an available UL-SCH resource for the initial transmission (new transmission) and the UL-SCH resource may accommodate both the BSR MAC CE and its subheader resulting from the LCP:
   ▪ Indicate a multiplexing and assembly process to construct a BSR MAC CE
- For other cases (else):
   ▪ Trigger an Updating BSR dedicated SR

For example, MAC-CellGroupConfig, which includes schedulingRequestID-UpdatingBSR-r18 configuration information dedicated for Updating BSR, in a specific MAC entity/cell group, may have an ASN.1 structure shown in Table 2 below.

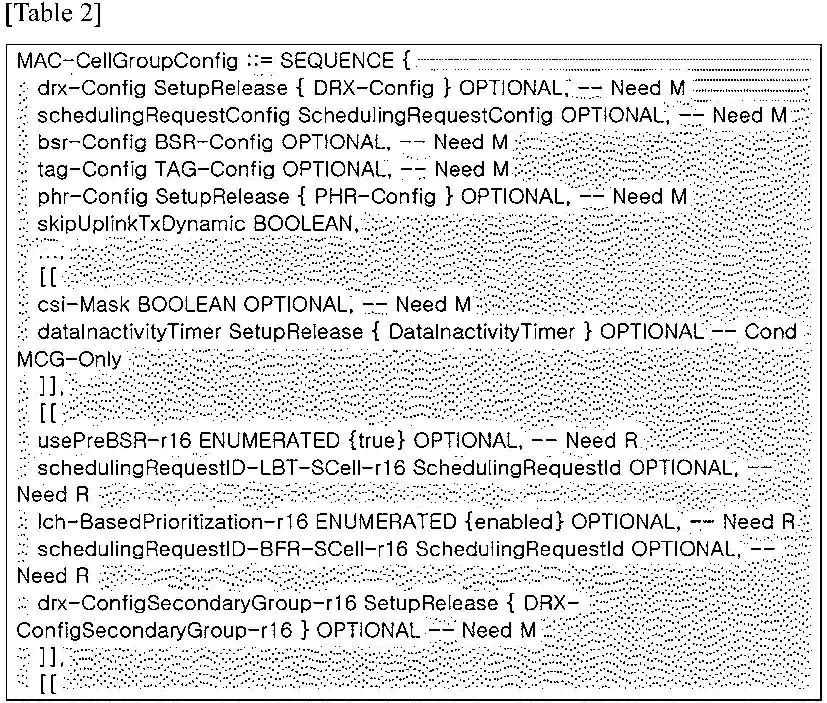

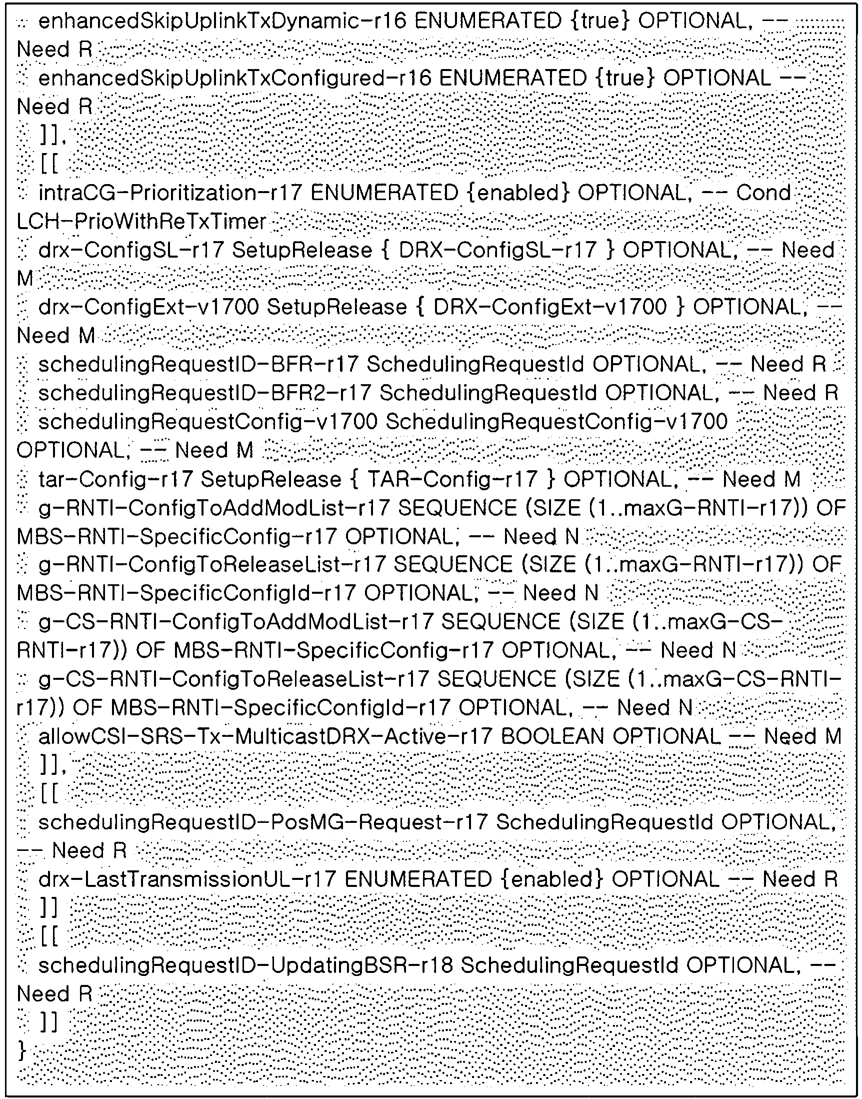

As an embodiment of the disclosure, the range that schedulingRequestID-UpdatingBSR-r18 can have may be integers between 0 and 7.

As an embodiment of the disclosure, the base station may indicate whether to trigger an Updating BSR for each LCG within specific MAC entity/cell group configuration information (e.g., MAC-CellGroupConfig) via RRC signaling (e.g., RRC reconfiguration). In this case, the UE may trigger an Updating BSR only in LCGs where the Updating BSR trigger is allowed if the above-described Updating BSR trigger condition is satisfied.

As an embodiment of the disclosure, the base station may include schedulingRequestID-UpdatingBSR-r18, which indicates an Updating BSR-dedicated SR configuration for each LCG, in specific MAC entity/cell group configuration information (e.g., MAC-CellGroupConfig) via RRC signaling (e.g., RRC reconfiguration). In this case, the UE may trigger an SR only for LCGs where schedulingRequestID-UpdatingBSR-r18 is configured if the aforementioned Updating BSR dedicated SR trigger condition is satisfied.

According to an embodiment of the disclosure, if a specific UL grant includes all available pending uplink data but does not include a BSR MAC CE and its subheader, all BSRs including the triggered Updating BSR may be canceled.

According to an embodiment of the disclosure, if a specific MAC PDU includes a BSR MAC CE and the buffer status of all BSR trigger events that has occurred before the corresponding MAC PDU assembly (including the buffer status of the last BSR trigger event) is reported through the BSR, all BSRs including the Updating BSR having been triggered before the corresponding MAC PDU assembly may be canceled.

According to an embodiment of the disclosure, for a specific LCH/LCG/MAC entity/cell group, when the change/decrease in uplink buffer (|newly arrived data size - discarded data size|) not yet reported (after the most recent BSR report) is less than or equal to a specific threshold, if there are pending Updating BSRs that have not yet been canceled, the UE may cancel all updating BSRs for the LCH/LCG/MAC entity/cell group. When the change in the uplink buffer size of the UE is not large, this may be interpreted as an attempt to reduce signaling overhead caused by BSR/SR transmission in case that the amount of wasted resources among the allocated UL grant resources is small.

As an embodiment of the disclosure, when the uplink buffer size of the UE is 0, if there are pending BSRs (including Regular, Periodic, and Updating BSRs) that have not yet been canceled, all pending BSRs may be canceled. For example, if a pending BSR is canceled, the SR transmission triggered by that BSR may also be canceled. This may be interpreted as notifying the base station that no further SR transmission will occur, thereby notifying the base station that the UL grant is no longer needed.

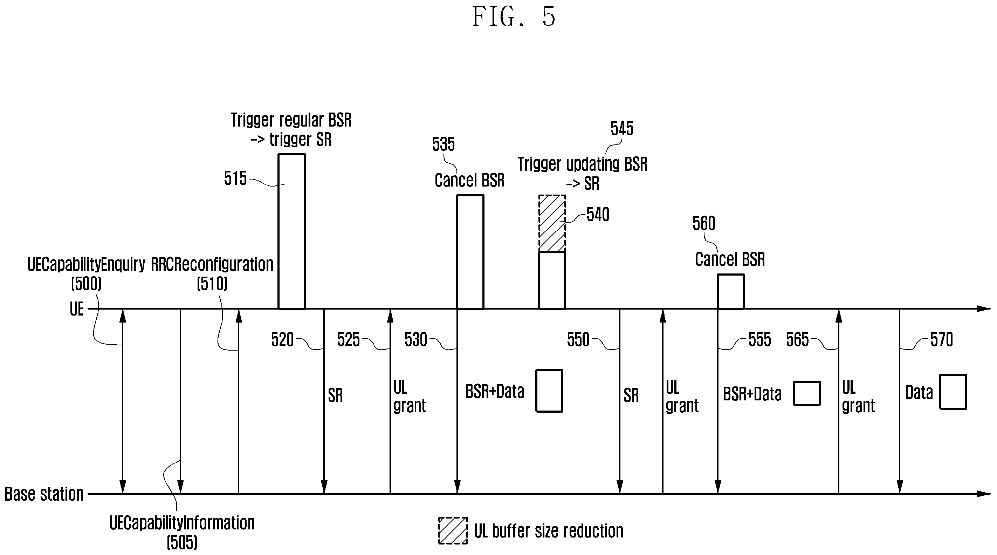

FIG. 5 is a diagram illustrating a situation in which an Updating BSR is triggered by a decrease in the uplink buffer size of the UE according to an embodiment of the disclosure.

With reference to FIG. 5, the base station may transmit a UE capability enquiry (UECapabilityEnquiry) message 500 requesting capability reporting to the UE in connected state (RRC_CONNECTED). The base station may include a UE capability request for each radio access technology (RAT) type in the UECapabilityEnquiry message 500. The request for each RAT type may include information about the requested frequency band.

Additionally, when requesting the generation of a UECapabilityInformation message 505 from the UE, the base station may include filtering information that can indicate conditions and restrictions in the UECapabilityEnquiry message 500. Here, the base station may utilize this filtering information to indicate whether the UE should report support for the Updating BSR trigger-related function. The UE may construct a UE capability information (UECapabilityInformation) message 505 corresponding to the UECapabilityEnquiry message 500, and report a response for the capability enquiry message to the base station. For example, the UECapabilityInformation message 505 may include a parameter indicating whether the UE supports the Updating BSR trigger-related function. For instance, this parameter may be 1-bit information. Additionally, for example, presence of this parameter may indicate that the Updating BSR trigger-related function is supported, and absence of this parameter may indicate that the corresponding function is not supported. For example, the UECapabilityInformation message 505 may include an indication indicating whether the UE supports the Updating BSR dedicated SR.

The base station may determine whether the UE supports the Updating BSR trigger-related function based on the received UECapabilityInformation message 505. The base station may determine whether the UE supports the Updating BSR dedicated SR based on the received UECapabilityInformation message 505. Upon determining that the UE supports the Updating BSR trigger-related function, the base station may indicate an Updating BSR trigger-related configuration via a specific RRC message (e.g., RRCReconfiguration message 510). Upon determining that the UE supports the Updating BSR dedicated SR, the base station may indicate an Updating BSR dedicated SR configuration via a specific RRC message (e.g., RRCReconfiguration message 510). For example, the Updating BSR trigger-related configuration may include the following configuration in addition to the RRC configuration described above in the disclosure.
- Configuration information for allowing and/or activating/deactivating the Updating BSR trigger per LCH/LCG/MAC entity/cell group
- Configuration information for configuring and/or activating/deactivating the Updating BSR dedicated SR per LCH/LCG/MAC entity/cell group

With reference to FIG. 5, the UE may trigger a Regular BSR when new data is generated in the uplink buffer (515). This Regular BSR may trigger an SR 520. Upon receiving the SR, the base station may provide (allocate/transmit) a UL grant 525 to the UE. The UE may transmit a MAC PDU by using UL-SCH resources allocated by the UL grant.

The MAC PDU may include a BSR MAC CE triggered by the Regular BSR and uplink data (530). When the BSR MAC CE is included in the MAC PDU, a previously triggered Regular BSR may be canceled (535). Before the next UL grant arrives, the UE's uplink buffer size may decrease (540). This event (e.g., a decrease in the UE's uplink buffer size) may satisfy the Updating BSR trigger condition, triggering an Updating BSR (545). When the Updating BSR is triggered, an Updating BSR dedicated SR may be triggered (550) and transmitted to the base station. Upon receiving the Updating BSR dedicated SR, the base station may recognize that an Updating BSR trigger event has occurred, and may allocate an appropriate/random UL grant and transmit it to the UE. The UE may transmit a MAC PDU by using UL-SCH resources allocated by the corresponding UL grant (555). This MAC PDU may include a BSR MAC CE due to the Updating BSR. Hence, the pending Updating BSR may be canceled (560). Upon receiving a report of the reduced uplink buffer size via the BSR MAC CE, the base station may provide (allocate/transmit) an appropriate/random UL grant to the UE (565). Therefore, the UE may utilize the UL-SCH resources allocated by the UL grant to transmit a MAC PDU including the remaining data (570). Consequently, when the uplink buffer size of the UE is reduced, the Updating BSR may be triggered and the reduced uplink buffer size may be reported to the base station, thereby reducing waste of UL resources.

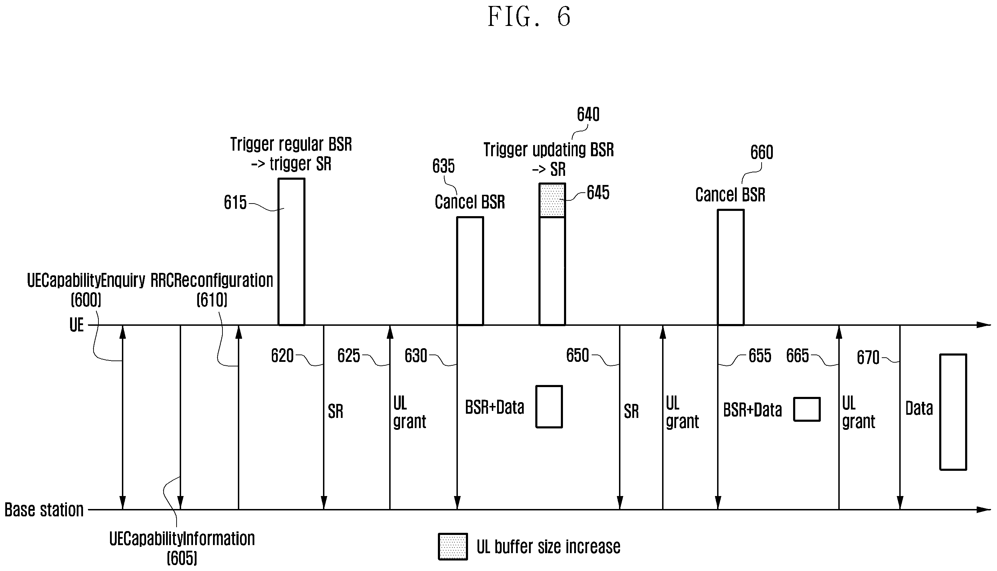

FIG. 6 is a diagram illustrating a situation in which an Updating BSR is triggered by a change in the uplink buffer size of the UE according to an embodiment of the disclosure.

With reference to FIG. 6, the base station may transmit a UE capability enquiry (UECapabilityEnquiry) message 600 requesting capability reporting to the UE in connected state (RRC_CONNECTED). The base station may include a UE capability request for each radio access technology (RAT) type in the UECapabilityEnquiry message 600. The request for each RAT type may include information about the requested frequency band.

Additionally, when requesting the generation of a UECapabilityInformation message 605 from the UE, the base station may include filtering information that can indicate conditions and restrictions in the UECapabilityEnquiry message 600. Here, the base station may utilize this filtering information to indicate whether the UE should report support for the Updating BSR trigger-related function. The UE may construct a UE capability information (UECapabilityInformation) message 605 corresponding to the UECapabilityEnquiry message 600, and report a response for the capability enquiry message to the base station. For example, the UECapabilityInformation message 605 may include a parameter indicating whether the UE supports the Updating BSR trigger-related function. For instance, this parameter may be 1-bit information. Additionally, for example, presence of this parameter may indicate that the Updating BSR trigger-related function is supported, and absence of this parameter may indicate that the corresponding function is not supported. For example, the UECapabilityInformation message 605 may include an indication indicating whether the UE supports the Updating BSR dedicated SR.

The base station may determine whether the UE supports the Updating BSR trigger-related function based on the received UECapabilityInformation message 605. The base station may determine whether the UE supports the Updating BSR dedicated SR based on the received UECapabilityInformation message 605. Upon determining that the UE supports the Updating BSR trigger-related function, the base station may indicate an Updating BSR trigger-related configuration via a specific RRC message (e.g., RRCReconfiguration message 610). Upon determining that the UE supports the Updating BSR dedicated SR, the base station may indicate an Updating BSR dedicated SR configuration via a specific RRC message (e.g., RRCReconfiguration message 610). For example, the Updating BSR trigger-related configuration may include the following configuration in addition to the RRC configuration described above in the disclosure.
- Configuration information for allowing and/or activating/deactivating the Updating BSR trigger per LCH/LCG/MAC entity/cell group
- Configuration information for configuring and/or activating/deactivating the Updating BSR dedicated SR per LCH/LCG/MAC entity/cell group

According to an embodiment, the UE may trigger a Regular BSR when new data is generated in the uplink buffer (615). This Regular BSR may trigger an SR (620). Upon receiving the SR, the base station may provide (allocate/transmit) a UL grant 625 to the UE. The UE may transmit a MAC PDU by using UL-SCH resources allocated by the UL grant. The MAC PDU may include a BSR MAC CE triggered by the Regular BSR and uplink data (630). When the BSR MAC CE is included in the MAC PDU, a previously triggered Regular BSR may be canceled (635). Before the next UL grant arrives (is allocated/received), new data may be generated in the UE's uplink buffer, causing the buffer size to increase (645). Here, the corresponding event may not satisfy the Regular BSR trigger condition described above, but may satisfy the Updating BSR trigger condition described above. Hence, an Updating BSR may be triggered (640). When the Updating BSR is triggered, an Updating BSR dedicated SR may be triggered (650) and transmitted to the base station. Upon receiving the Updating BSR dedicated SR, the base station may recognize that an Updating BSR trigger event has occurred, and may allocate an appropriate/random UL grant and provide (transmit) it to the UE. The UE may transmit a MAC PDU by using UL-SCH resources allocated by the corresponding UL grant (655). This MAC PDU may include a BSR MAC CE due to the Updating BSR. Hence, the pending Updating BSR may be canceled (660). Upon receiving a report of the increased uplink buffer size via the BSR MAC CE, the base station may provide (allocate/transmit) an appropriate/random UL grant to the UE (665). The appropriate/random UL grant 665 allocated above may be based on the uplink buffer size reported via the BSR MAC CE.

Therefore, the UE may utilize the UL-SCH resources allocated by the UL grant to transmit a MAC PDU including the remaining data (670). Consequently, when the UE's uplink buffer size increases but the Regular BSR trigger condition is not met, the Updating BSR is triggered, allowing the changed uplink buffer size to be reported to the base station in a timely manner. This may reduce UL data transmission delay.

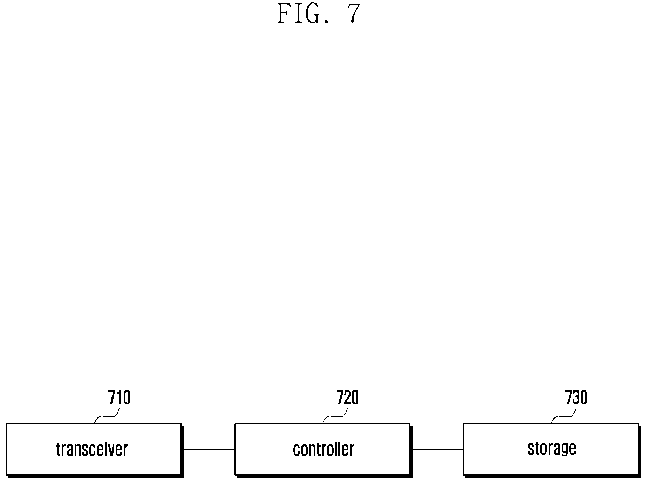

Meanwhile, FIG. 7 is a diagram illustrating the structure of a UE according to an embodiment of the disclosure.

With reference to FIG. 7, the UE may include a transceiver 710, a controller 720, and a storage 730. In the disclosure, the controller may be defined as a circuit, an application-specific integrated circuit, or at least one processor.

The transceiver 710 may transmit and receive signals to and from other network entities. For example, the transceiver 1410 may transmit and receive an SR and UL grant to and from the base station.

The controller 720 may control the overall operation of the UE according to an embodiment proposed in the disclosure. For example, the controller 720 may control the signal flow between blocks to perform operations according to the flowchart described above. According to an embodiment, the controller 720 may detect/identify a decrease or increase in the UE's uplink buffer size. The controller 720 may identify whether the Updating BSR trigger condition is satisfied. If the Updating BSR is triggered, the controller 720 may control transmission of an Updating BSR dedicated SR.

The storage 730 may store at least one of the information transmitted and received through the transceiver 710 or the information generated through the controller 720.

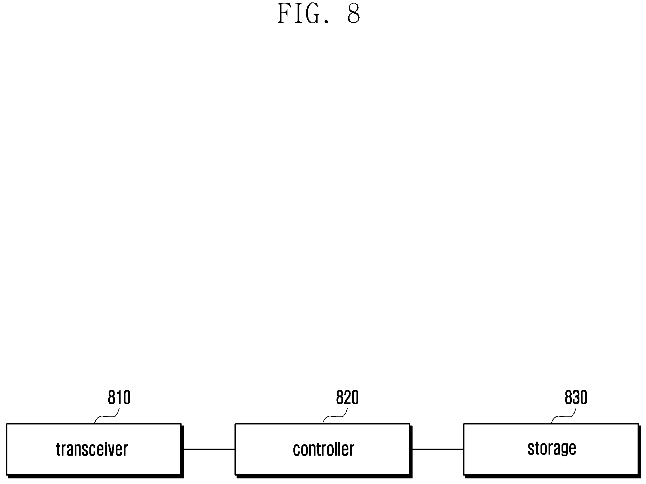

FIG. 8 is a diagram illustrating the structure of a base station according to an embodiment of the disclosure.

With reference to FIG. 8, the base station may include a transceiver 810, a controller 820, and a storage 830. In the disclosure, the controller may be defined as a circuit, an application-specific integrated circuit, or at least one processor.

The transceiver 810 may transmit and receive signals to and from other network entities. For example, the transceiver 810 can transmit and receive an SR and UL grant to and from a UE.

The controller 820 may control the overall operation of the base station according to the embodiment proposed in the disclosure. For example, the controller 820 may control the signal flow between blocks to perform operations according to the flowchart described above. Specifically, when receiving a report of a reduced or increased uplink buffer size from a UE according to an embodiment of the disclosure, the controller 820 may control transmission of an appropriate/random UL grant to the UE.

The storage 830 may store at least one of the information transmitted and received through the transceiver 810 or the information generated through the controller 820.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Meanwhile, the embodiments of the disclosure disclosed in this specification and drawings are specific examples to easily explain the technical content of the disclosure and facilitate understanding of the disclosure, and are not intended to limit the scope of the disclosure. In other words, it will be apparent to those skilled in the art that other variations based on the technical concepts of the disclosure are possible. Additionally, the above embodiments may be combined and operated as needed. For example, portions of one embodiment of the disclosure and portions of another embodiment may be combined to operate a base station and a terminal. In addition, other modifications based on the technical ideas of the above embodiments may be carried out in various systems, such as FDD LTE systems, TDD LTE systems, or 5G or NR systems.

## Claims

1. A method performed by a terminal in a wireless communication system, the method comprising:
transmitting, to a base station, a first scheduling request (SR) based on triggering of a first buffer status report (BSR);
receiving a first uplink (UL) grant from the base station based on the first SR;
transmitting a medium access control (MAC) protocol data unit (PDU) based on the first UL grant, and canceling the triggered first BSR;
identifying a change in UL buffer size of the terminal; and
transmitting a second SR to the base station based on the change in the UL buffer size.

2. The method of claim 1, wherein transmitting a second SR further comprises:
triggering a second BSR based on the change in the UL buffer size; and
receiving a second UL grant from the base station after the second SR is transmitted based on the triggered second BSR.

3. The method of claim 1, wherein identifying a change in UL buffer size further comprises:
identifying whether a change in the UL buffer size of the terminal that has not been reported to the base station is greater than or equal to a preset threshold after reporting the first BSR based on the first UL grant; and
triggering a second BSR in case that the change is greater than or equal to the preset threshold.

4. The method of claim 1, further comprising:
receiving, from the base station, information about a prohibit timer for a BSR triggered based on a change in the UL buffer size; and
triggering a second BSR in case that a change in the UL buffer size of the terminal is identified and the prohibit timer is not running.

5. The method of claim 1, further comprising:
receiving a terminal capability enquiry message from the base station;
in response to the capability enquiry message, transmitting a terminal capability information message including information indicating that the terminal supports a function associated with a BSR triggered based on a change in the UL buffer size, to the base station; and
receiving a control message including configuration information for the BSR triggered based on a change in the UL buffer size from the base station,
wherein the configuration information for the BSR triggered based on a change in the UL buffer size includes SR configuration information for the BSR triggered based on a change in the UL buffer size per logical channel (LCH), logical channel group (LCG), MAC entity, or cell group.

6. A method performed by a base station in a wireless communication system, the method comprising:
receiving a first SR from a terminal based on triggering of a first BSR;
transmitting a first uplink (UL) grant to the terminal based on the first SR;
receiving a MAC PDU based on the first UL grant; and
receiving a second SR from the terminal in response to cancelling of the triggered first BSR and detection of a change in UL buffer size of the terminal.

7. The method of claim 6, further comprising:
transmitting a terminal capability enquiry message to the terminal;
receiving, in response to the capability enquiry message, a terminal capability information message including information indicating that the terminal supports a function associated with a BSR triggered based on a change in the UL buffer size, from the terminal; and
transmitting, to the terminal, a control message including configuration information for the BSR triggered based on a change in the UL buffer size,
wherein the configuration information for the BSR triggered based on a change in the UL buffer size includes SR configuration information for the BSR triggered based on a change in the UL buffer size per logical channel (LCH), logical channel group (LCG), MAC entity, or cell group.

8. A terminal in a wireless communication system, comprising:
a transceiver; and
a controller that is configured to:
transmit, via the transceiver to a base station, a first scheduling request (SR) based on triggering of a first buffer status report (BSR);
receive a first uplink (UL) grant from the base station based on the first SR;
transmit a medium access control (MAC) protocol data unit (PDU) based on the first UL grant, and cancel the triggered first BSR;
identify a change in UL buffer size of the terminal; and
transmit a second SR to the base station based on the change in the UL buffer size.

9. The terminal of claim 8, wherein the controller is configured to:
trigger a second BSR based on the change in the UL buffer size; and
receive a second UL grant through the transceiver from the base station after the second SR is transmitted based on the triggered second BSR.

10. The terminal of claim 8, wherein the controller is configured to:
identify whether a change in the UL buffer size of the terminal that has not been reported to the base station is greater than or equal to a preset threshold after reporting the first BSR based on the first UL grant; and
trigger a second BSR in case that the change is greater than or equal to the preset threshold.

11. The terminal of claim 8, wherein the controller is configured to:
receive, from the base station, information about a prohibit timer for a BSR triggered based on a change in the UL buffer size; and
trigger a second BSR in case that a change in the UL buffer size of the terminal is identified and the prohibit timer is not running.

12. The terminal of claim 8,
wherein the controller is configured to:
receive a terminal capability enquiry message from the base station,
in response to the capability enquiry message, transmit, to the base station a terminal capability information message including information indicating that the terminal supports a function associated with a BSR triggered based on a change in the UL buffer size, and
receive a control message including configuration information for the BSR triggered based on a change in the UL buffer size from the base station; and
wherein the configuration information for the BSR triggered based on a change in the UL buffer size includes SR configuration information for the BSR triggered based on a change in the UL buffer size per logical channel (LCH), logical channel group (LCG), MAC entity, or cell group.

13. A base station in a wireless communication system, comprising:
a transceiver; and
a controller that is configured to:
receive a first SR through the transceiver from a terminal based on triggering of a first BSR;
transmit a first uplink (UL) grant to the terminal based on the first SR;
receive a MAC PDU based on the first UL grant; and
receive a second SR from the terminal in response to cancelling of the triggered first BSR and detection of a change in UL buffer size of the terminal.

14. The base station of claim 13,
wherein the controller is configured to:
transmit a terminal capability enquiry message to the terminal,
receive, from the terminal in response to the capability enquiry message, a terminal capability information message including information indicating that the terminal supports a function associated with a BSR triggered based on a change in the UL buffer size, and
transmit, to the terminal, a control message including configuration information for the BSR triggered based on a change in the UL buffer size; and
wherein the configuration information for the BSR triggered based on a change in the UL buffer size includes SR configuration information for the BSR triggered based on a change in the UL buffer size per logical channel (LCH), logical channel group (LCG), MAC entity, or cell group.
